Europäisches Patentamt

European Patent Office

Office européen des brevets

(19)

(11) Veröffentlichungsnummer : **0 003 467**
**B1**

(12) **EUROPÄISCHE PATENTSCHRIFT**

(45) Veröffentlichungstag der Patentschrift :
13.01.82

(51) Int. Cl.³ : **B 23 D 45/02**, B 26 D 5/02

(21) Anmeldenummer : **79810003.8**

(22) Anmeldetag : **19.01.79**

(54) **Schneidemaschine zum Trennen, insbesondere von Kunststoffplatten und Nichteisenmetallblechen.**

(30) Priorität : **01.02.78 CH 1107/78**

(43) Veröffentlichungstag der Anmeldung :
**08.08.79 (Patentblatt 79/16)**

(45) Bekanntmachung des Hinweises auf die Patenterteilung : **13.01.82 Patentblatt 82/02**

(84) Benannte Vertragsstaaten :
**DE FR GB IT NL**

(56) Entgegenhaltungen :
**DE - A - 2 533 296**
**DE - A - 2 538 236**
**GB - A - 662 310**
**GB - A - 1 080 893**
**US - A - 1 531 905**
**US - A - 1 987 409**
**US - A - 2 535 182**

(73) Patentinhaber : **Mechanik Muntelier AG**
**Hauptstrasse**
**CH-3280 Muntelier/FR (CH)**

(72) Erfinder : **Varga, Ferenc**
**Combette 22**
**CH-3280 Murten (CH)**

(74) Vertreter : **STEINER, Martin et al**
**c/o AMMANN PATENTANWAELTE AG BERN**
**Schwarztorstrasse 31**
**CH-3001 Bern (CH)**

EP 0 003 467 B1

Imprimerie Jouve, 18, rue St-Denis, 75001 Paris, France

Schneidemaschine zum Trennen, insbesondere von Kunststoffplatten und Nichteisenmetallblechen

Die vorliegende Erfindung betrifft eine Schneidmaschine zum Trennen von Flachmaterial, insbesondere von Kunststoffplatten und Nichteisenmetallblechen, mit einer Auflage für das Schneidgut und mindestens einem Trennblatt, das in einem Schutzgehäuse angeordnet ist und so antreibbar ist, dass sein aus dem Schutzgehäuse ragender Teil an der Schnittstelle in das Gehäuse eintritt, wobei das Schutzgehäuse, das Trennblatt und ein Antriebsmotor gemeinsam als Schneideinheit längs einer Führung parallel zur Auflage verschiebbar sind.

Mit bekannten Vorrichtungen dieser Art (US-A 3,339,597) ist es nur unzureichend möglich, verstärkte und unverstärkte Kunststoffplatten sowie Nichteisenmetallbleche rationell, exakt, fehlerfrei und gleichzeitig preisgünstig zu schneiden. Insbesondere ergeben sich mit bekannten Geräten und bei den obenerwähnten zu schneidenden Materialien Bruchstellen im Bereich der Schnittkante durch das an der Schnittstelle aus dem Material austretende Trennblatt.

Es ist Aufgabe der vorliegenden Erfindung, eine Schneidmaschine zu schaffen, welche ein rationelles, exaktes, fehlerfreies und preisgünstiges Schneiden von verstärkten und unverstärkten Kunststoffen sowie von Nichteisenmetallblechen gestattet.

Dies wird erfindungsgemäss dadurch erreicht, dass der die Oeffnung des Schutzgehäuses, durch welche das Trennblatt vorragt, umgebende Rand mindestens an der Schnittstelle an das Trennblatt spielarm anliegt und über das Flachmaterial gleitbar ist, und damit während des Trennvorgangs durch seine Pressung das zu trennende Material zwischen sich und der Auflage klemmt und eine Verformung und ein Aufreissen des Schnittränder am zu schneidenden Material durch das Trennblatt verhindert.

Es ist zwar aus der DE-A 25 38 236 bekannt, in einer Schneidvorrichtung für Profile seitlich des Trennblattes federnde Niederhalter gegen das Profil anzulegen, um dasselbe während des Schneidvorgangs sicher festzuhalten. Es ist jedoch weder eine bestimmte Drehrichtung des Trennblattes angegeben noch ist die Bedingung erfüllt, dass das Trennblatt an der Schnittstelle stets da aus dem Profil austritt, wo der Niederhalter gegen dasselbe anliegt. Es war somit nicht erkannt bzw. erkennbar, dass zum sauberen, genauen Schneiden von Flachmaterial mittels eines parallel zur Ebene des Flachmaterials verschiebbaren Trennblattes die erfindungsgemässen Bedingungen wesentlich sind.

Es ist auch bekannt, seitlich des Trennblattes zwei federbelastete Bügel auf das zu schneidende Flachmaterial aufliegen zu lassen (GB-A 1,080,893). Diese Bügel liegen jedoch nicht in der unmittelbaren Umgebung der Schnittstelle auf das Flachmaterial auf und können somit zur Verbesserung der Schnittqualität nicht im erfindungsgemässen Sinne beitragen.

Zur Unterstützung eines präzisen, fehlerfreien Schneidens ist vorzugsweise eine besondere Führung für die aus dem Trennblatt, seinem Antriebsmotor und dem Schutzgehäuse bestehende Schneideeinheit vorgesehen, die eine einfache Führungsstange und eine als zweites Führungsorgan in eine Nut der Auflage greifende Trennzunge aufweist. Damit ergibt sich eine besonders genaue Führung in unmittelbarer Nähe der eigentlichen Schnittstelle, und die Führung birgt auch nicht die Gefahr des Verkantens und einer Verklemmung oder Selbsthemmung in sich.

Ein besonders sauberes Arbeiten wird weiterhin dadurch gewährleistet, dass das Schutzgehäuse zum Sammeln und Abführen des Staubes und der Späne dient, wobei die Ventilatorwirkung des Trennblattes zur Förderung genügt. Durch seitliche Nuten an der Innenseite des Schutzgehäuses, die vor dem Auslass für den Staub und die Späne enden, können diese Teilchen vollständig abgeführt werden und gelangen nicht an die Schnittstelle zurück, was wiederum zu einem besonders sauberen Schnitt beiträgt. Vorzugsweise können Befestigungsflansche für das Trennblatt mit Radialnuten bzw. -rippen ausgeführt sein, um die Ventilatorwirkung zu erhöhen, wobei die Luft teils durch den Motor angesaugt und derselbe intensiv gekühlt werden kann.

Die Ventilatorwirkung des Trennblattes kann auch zum Ansaugen eines Schmiermittels für das Trennblatt ausgenutzt werden.

Eine besonders bequeme Handhabung der Schneideeinheit ergibt sich durch die Anordnung eines Griffes zum Anheben der Schneideeinheit unterhalb einer festen Handstütze, was erlaubt, mit einem Handgriff sowohl die Schneideeinheit anzuheben und längs der Führungen zu verschieben.

Weitere Einzelheiten und Vorteile ergeben sich aus der folgenden Beschreibung eines Ausführungsbeispiels. Es zeigen :

Figur 1  eine Vorderansicht der Schneidemaschine, teilweise geschnitten,

Figur 2  eine Seitenansicht der Schneidemaschine, teilweise geschnitten,

Figur 3  eine Aufsicht auf den äusseren Befestigungsflansch des Trennblattes der Schneidemaschine,

Figur 4  eine Ansicht der Schneidemaschine von oben teilweise geschnitten.

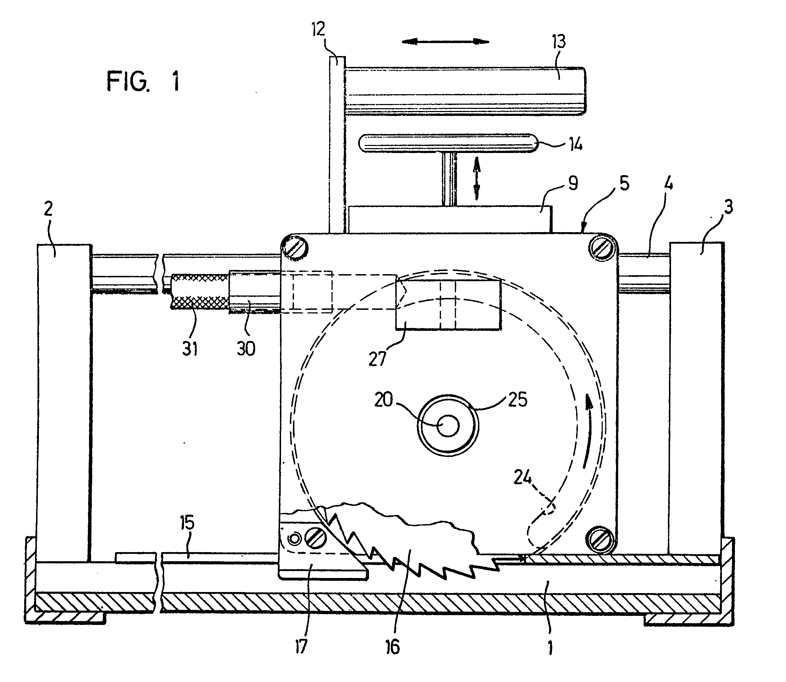

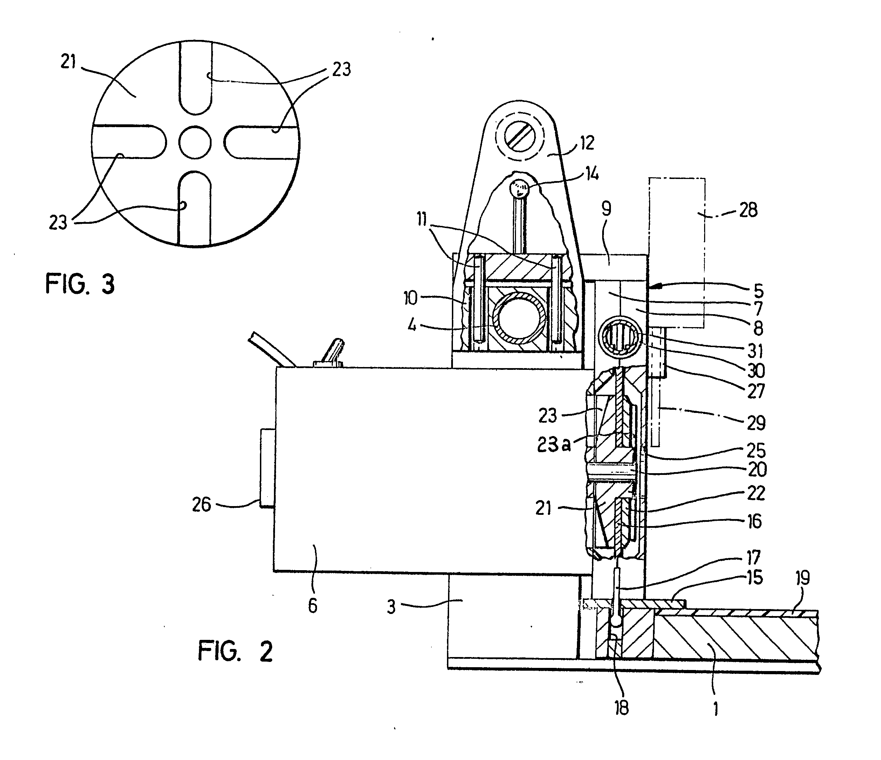

Die Schneidemaschine umfasst gemäss den Figuren 1 und 2 eine Grundplatte 1 mit vertikalen Seitenstreben 2 und 3. Eine Längsführung 4 bestehend aus einem zylindrischen Metallrohr ist oben in den Streben 2 und 3 gehalten. Das Trennblatt 16 und Trennblattgehäuse 5 bilden zusammen mit dem Antriebsmotor 6 die Schneideeinheit, welche in horizontaler und vertikaler Richtung bewegt werden kann. Das Trennblattgehäuse 5 besteht aus einer hinteren und vorderen Platte 7, 8. Oben am Trennblattgehäuse 5 ist ein Vertikalschlitten 9 befestigt, der mittels Stiften 11 in einem Horizontalschlitten 10 geführt ist.

Der Horizontalschlitten mit der ganzen Schneideeinheit kann mit dem Handgriff 13 entlang der Längsführung 4 horizontal verschoben werden. Dieser Handriff 13 ist mittels einer vertikalen Platte 12 am Horizontalschlitten 10 befestigt. Am Vertikalschlitten 9 ist ein Hebehandgriff 14 montiert. Mit diesem sich unterhalb des Handgriffes 13 befindlichen Hebehandgriff 14 kann die Schneideeinheit von der Grundplatte 1 und vom Schneidgut 15 abgehoben werden, wobei der Handgriff 13 als Handstütze dient. Man kann also bequem die beiden Griffe 13 und 14 mit einer Hand umgreifen, um die Schneideeinheit anzuheben und zu verschieben. Die Schneideeinheit kann dabei in vertikaler Richtung so weit nach oben abgehoben werden, bis der Motor 6 gegen den Horizontalschlitten 10 anschlägt. Dieser Anhebeweg ist nur gerade so lang, dass diejenige Person, welche die Schneidemaschine betätigt, mit der Hand nicht in den Bereich des unten vorragenden Trennblattes 16 geraten kann. Zur Positionierung der Schneideeinheit über dem Schneidegut 15 wird dieselbe mit dem Hebegriff 14 angehoben und mit dem Führungshandgriff 13 horizontal entlang der Längsführung 4 verschoben.

Die am Trennblattgehäuse 5 befestigte Trennzunge 17 gleitet in der Schneidenut 18 und dient neben der Längsführung 4 zur definierten Horizontalbewegung mit genauer seitlicher Führung der Schneideeinheit. Die Trennzunge 17 wird in der Schneidenut 18 spielfrei geführt und ist am unteren Ende kugelförmig ausgebildet.

Während des Schneidevorganges wird das Schneidgut 15 durch das Gewicht der Schneideeinheit mit Motor- und Trennblattgehäuse mindestens in der unmittelbaren Umgebung der Schnittstelle gepresst. Dadurch werden Vibrationen und ein Verrutschen des Schneidegutes 15 sowie Schwingungen der Schneideeinheit und ein Aufreissen und Hochbiegen des Materials verhindert, was zur Erzielung eines sauberen Schnittes beiträgt.

Das Schneidgut 15 liegt auf einer rutschfesten, vorzugsweise zähelastischen Unterlage 19 auf. Diese Massnahme trägt ebenfalls zur Erzeugung sauberer Schnittkanten bei. Zusätzlich wird dadurch die Masshaltigkeit verbessert.

Das Trennblatt 16 ist an der Motorwelle 20 durch einen inneren Flansch 21 und einen äusseren Flansch 22 befestigt. Der Befestigungsflansch 21 für das Trennblatt 16 ist wie aus Figur 2 ersichtlich, so profiliert, dass er bei hoher Drehzahl die Wirkung eines Zentrifugalventilators hat.

In Figur 3 ist eine Draufsicht auf den inneren Befestigungsflansch 21 dargestellt. Dieser Flansch 21 weist vier radiale in einem Winkel von 90° zueinander angeordnete Nuten 23 auf.

Aehnlich kann der Flansch 22 mit radialen Nuten 23a zur Erhöhung der Ventilatorwirkung versehen sein. Die Flansche 21 und 22 sind mittels durch das Trennblatt 16 durchgehender Schrauben verbunden, die nicht dargestellt sind.

Im Trennblattgehäuse 5 ist konzentrisch zur Motorwelle 20 ein Sammelkanal 24 angeordnet.

Dieser Sammelkanal besteht aus an der Innenseite beider Gehäusehälften vorgesehenen, gebogenen Nuten, die vor einem tangentialen Auslass 30 für Staub und Späne enden. Dieser Sammelkanal 24 konzentriert die durch die Luftöffnungen 25 und 26 angesaugte Luft. Der durch die Oeffnungen 26 angesaugte Luftstrom kühlt zudem den Motor.

An der vorderen Platte 8 des Trennblattgehäuses 5 ist ein Flansch 27 für einen Schmiermittelbehälter 28 vorgesehen. Das Schmiermittel wird über einen Tropfkanal 29 zur Luftansaugeöffnung 25 geführt und gelangt auf das Trennblatt 16 und zur Schnittstelle. Die Schmierung ist beim Trennen von Buntmetallen wichtig. Das verbrauchte Schmiermittel wird mit den beim Trennvorgang entstehenden Spänen durch das Abführrohr 30 und die Schlauchleitung 31 abgesaugt.

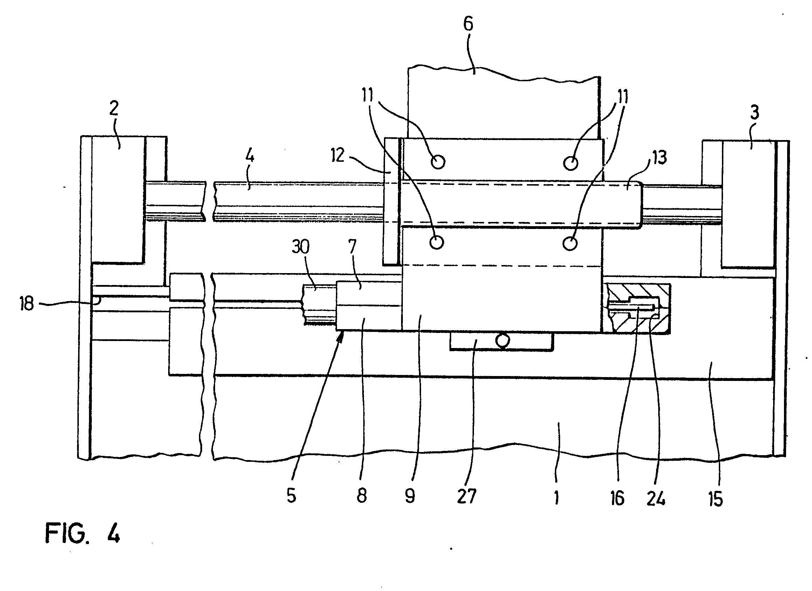

In Figur 4 ist zusätzlich noch eine Draufsicht auf die Schneidemaschine dargestellt.

Die Schneidemaschine gemäss dem beschriebenen Ausführungsbeispiel ermöglicht die preisgünstige Herstellung von sehr sauberen und massgenauen Schnitten in verstärkten und unverstärkten Kunststoffplatten (z. B. Formica) sowie in Nichteisenmetallblechen. Die verschiedenen zu schneidenden Materialien können ohne nennenswerte Umrüstung der Maschine nacheinander verarbeitet werden. Im weiteren ist die beschriebene Maschine äusserst unfallsicher und gewährleistet einen staubfreien und dadurch gesunden Arbeitsplatz. Die Schneidemaschine kann überdies leicht, z. B. durch angelerntes Personal gehandhabt werden.

**Ansprüche**

1. Schneidmaschine zum Trennen von Flachmaterial, insbesondere von Kunststoffplatten und Nichteisenmetallblechen, mit einer Auflage (1) für das Schneidgut und mindestens einem Trennblatt (16), das in einem Schutzgehäuse (5) angeordnet ist und so antreibbar ist, dass sein aus dem Schutzgehäuse (5) ragender Teil an der Schnittstelle in das Gehäuse (5) eintritt, wobei das Schutzgehäuse (5), das Trennblatt (16) und ein Antriebsmotor gemeinsam als Schneideinheit längs einer Führung parallel zur Auflage (1) verschiebbar sind, dadurch gekennzeichnet, dass der die Oeffnung des Schutzgehäuses (5), durch welche das Trennblatt (16) vorragt, umgebende Rand mindestens an der Schnittstelle an das Trennblatt spielarm anliegt und über das Flachmaterial gleitbar ist, und damit während des Trennvorgangs durch seine Pressung das zu trennende Material (15) zwischen sich und der Auflage (1) klemmt und eine Verformung und ein Aufreissen der Schnittränder am zu schneidenden Material (15) durch das Trennblatt (16) verhindert.

2. Maschine nach Anspruch 1, dadurch gekennzeichnet, dass das Schutzgehäuse (5) rechtwinklig zur Auflage (1) verschiebbar ist und mit seinem Eigengewicht und/oder Federkraft auf das Schneidegut (15) aufliegt.

3. Maschine nach Anspruch 1 oder 2, wobei das Trennblatt (16) das Schutzgehäuse (5) und ein Antriebsmotor (6) gemeinsamt als Schneideinheit längs einer Führung (4) verschiebbar sind, dadurch gekennzeichnet, dass die Schneideinheit einen Griff (14) zum Anheben derselben aufweist, über welchem sich eine feste Handstütze (13) befindet, die mit der Schneideeinheit längs der Führung (4) verschiebbar ist.

4. Maschine nach Anspruch 3, dadurch gekennzeichnet, dass die Führung als einziges, stabförmiges Organ (4) ausgebildet ist, und dass eine Trennzunge (17) des Schutzgehäuses zur seitlichen Führung des Schneideinheit als zweites Führungsorgan in eine Nut (18) der Auflage (1) greift.

5. Maschine nach Anspruch 4, dadurch gekennzeichnet, dass das Trennblatt (16) in die Nut (18) der Auflage (1) eingreift.

6. Maschine nach einem der Ansprüche 1-5, wobei dass das Schutzgehäuse einen Auslass (30) für Späne aufweist, dadurch gekennzeichnet, dass an der Innenseite des Schutzgehäuses (5) zwischen der Schnittstelle bzw. Eintrittstelle des Trennblattes (16) und dem Auslass (30) Ringnuten (24) für die Spanabfuhr vorgesehen sind.

7. Maschine nach Anspruch 6, dadurch gekennzeichnet, dass das Schutzgehäuse (5) Lufteintrittsöffnungen (25, 26) im Bereiche der Achse der Trennscheibe (16) aufweist, durch welche Luft angesaugt und radial in die Ringnuten und den Auslass gefördert wird.

8. Maschine nach Anspruch 7, dadurch gekennzeichnet, dass Luft durch den Motor (6) angesaugt wird.

9. Maschine nach einem der Ansprüche 1-8, dadurch gekennzeichnet, dass mindestens einer der Befestigungsflansche (21) für das Trennblatt (16) radial angeordnete Ventilatoren (23, 23a) aufweist.

10. Maschine nach einem der Ansprüche 1-9, gekennzeichnet durch einen an der Schneideinheit angeordneten Schmiermittelbehälter (28) mit Schmiermittelleitung (29), deren Austrittsöffnung nahe an der Trennscheibe (16) liegt, derart, dass Schmiermittel unter dem Sog der Trennscheibendrehung angesaugt wird.

**Claims**

1. Severing machine for flat materials, particularly for cutting plastics and non ferrous metal sheets, with a supporting plate (17) for the piece to be cut and at least one cutting disc (16) within a protection casing (5), said disc being arranged so that its part protruding out of the casing (5) enters said casing at the place of cutting, said casing (5), said cutting discs (16) and a driving motor (6) forming a cutting unit which is movable along a guide, in parallel with to the supporting plate (1), wherein the border surrounding the opening of the protection casing (5) through which the cutting disc protrudes out of the casing, sits at least at the place of cutting with a weak play on the cutting disc, said border being capable of sliding on said flat material so that during the cutting process, it clamps by way of its pressure the material to be cut between itself and said supporting plate (1) for avoiding a deformation and a cracking of the edges of the slit produced in said material (15) by the cutting disc (16).

2. Machine according to claim 1, wherein the protection casing (5) is movable perpendicularly to said supporting plate (1), said protection casing lying by its own weight and/or the force of a spring on the piece to be cut (15).

3. Machine according to one of the claims 1 or 2 in which the cutting disc (16), the protection casing (5) and a driving motor (6) form a cutting unit movable along a guide, wherein said cutting unit comprises a handle (14) for lifting said cutting unit and a fixed supporting handle (13) located over said lifting handle, said fixed supporting handle being movable with the cutting unit along said guide (4).

4. Machine according to claim 3, wherein said guide is rod shaped (4) and wherein a guiding tongue (17) of the protection casing is engaged as a second guiding means in a guiding groove (18) of the supporting plate (1) for providing a side guidance of the cutting unit.

5. Machine according to claim 4, wherein the cutting disc (16) is engaged in the guiding groove (18) of the supporting plate (1).

6. Machine according to one of the claims 1-5 in which the protection casing comprises an outlet (30) for splinters, wherein annular grooves (24) for the removal of the splinters are provided inside of the protection casing (5) between the cutting place, respectively the place where the cutting disc (16) enters the casing and the outlet (30).

7. Machine according to claim 6, wherein the protection casing (5) comprises air inlets (25, 26) in the neighbourhood of the shaft of the cutting disc through which air is sucked in and then radially forced back in the annular grooves and the outlet.

8. Machine according to claim 7, wherein air is sucked in through the motor (6).

9. Machine according to one of the claims 1-8, wherein at least one of the attachment flanges (21) for the cutting disc (16) comprises radially disposed ventilation means (23, 23a).

10. Machine according to one of the claims 1-9, wherein a receptacle (28) for the lubricant is mounted to the cutting unit, said receptacle comprising a pipe (29) for the lubricant the outlet of which being in the neighbourhood of the cutting disc (16) so that the lubricant is sucked off by the suction due to the rotation of the cutting disc.

**Revendications**

1. Machine à tronçonner des matériaux plats, en particulier des plaques synthétiques et des tôles métalliques non ferreuses, avec une plaque d'appui (1) pour la pièce à tronçonner et au moins un disque de tronçonnage (16) disposé dans un boîtier de protection (5) de manière que sa partie dépassante dudit boîtier (5) entre dans ledit boîtier à l'endroit de coupe, le boîtier (5), le disque de tronçonnage (16) et un moteur d'entraînement (6) formant une unité de tronçonnage mobile le long d'un guide, parallèlement à la plaque d'appui (1), caractérisée par le fait que le bord entourant l'ouverture du boîtier de protection (5) à travers laquelle dépasse le disque de tronçonnage (16) affleure presque sans jeu ce dernier, au moins à l'endroit de coupe, ledit bord pouvant glisser sur ledit matériau plat de sorte que pendant le processus de tronçonnage, il maintienne par sa pression le matériau (15) à tronçonner entre lui et ladite plaque d'appui (1) afin d'empêcher une déformation et un fendillage des bords de la coupe produite par le disque de tronçonnage dans ledit matériau (15).

2. Machine selon la revendication 1, caractérisée par le fait que le boîtier de protection (5) est mobile perpendiculairement à ladite plaque d'appui (1) et qu'il repose par son propre poids et/ou la force d'un ressort sur la pièce à tronçonner (15).

3. Machine selon l'une des revendications 1 ou 2, dans laquelle le disque de tronçonnage (16), le boîtier de protection (5) et un moteur d'entraînement (6) forment une unité de tronçonnage mobile le long d'un guide (4), caractérisée par le fait que l'unité de tronçonnage comporte une poignée de levage (14) pour lever ladite unité de tronçonnage et une poignée-support fixe (13) située au-dessus de ladite poignée de levage, ladite poignée-support fixe étant mobile avec l'unité de tronçonnage le long dudit guide (4).

4. Machine selon la revendication 3, caractérisée par le fait que ledit guide est en forme de barre (4) et qu'une langue de guidage (17) du boîtier de protection est engagée, comme second organe de guidage, dans une gorge de guidage (18) de la plaque d'appui (1), pour le guidage latéral de l'unité de tronçonnage.

5. Machine selon la revendication 4, caractérisée par le fait que le disque de tronçonnage (16) s'engage dans la gorge de guidage (18) de la plaque d'appui (1).

6. Machine selon l'une des revendications 1-5, dans laquelle le boîtier de protection comporte une évacuation (30) pour des copeaux, caractérisée par le fait que des gorges annulaires (24) pour l'évacuation des copeaux sont prévues à l'intérieur du boîtier de protection (5), entre l'endroit de coupe, respectivement l'endroit d'entrée du disque de tronçonnage (16) et l'évacuation (30).

7. Machine selon la revendication 6, caractérisée par le fait que le boîtier de protection (5) comprend des ouvertures d'entrée d'air (25, 26) au voisinage de l'arbre du disque de tronçonnage, par lesquelles de l'air est aspiré puis refoulé radialement dans les gorges annulaires et l'évacuation.

8. Machine selon la revendication 7, caractérisée par le fait que de l'air est aspiré à travers le moteur (6).

9. Machine selon l'une des revendications 1-8, caractérisée par le fait qu'au moins un des disques de fixation (21) pour le disque de tronçonnage (16) comprend des éléments de ventilation (23, 23a) disposés radialement.

10. Machine selon l'une des revendications 1-9, caractérisée par un récipient (28) de milieu de graissage monté à l'unité de tronçonnage et comportant une conduite (29) de milieu de graissage dont l'ouverture de sortie est disposée au voisinage du disque de tronçonnage (16), de manière que le milieu de graissage soit aspiré par l'effet de succion dû à la rotation du disque de tronçonnage.

FIG. 1

FIG. 3

FIG. 2

0 003 467

FIG. 4